# EUROPEAN PATENT APPLICATION

(11) **EP 1 956 498 A1**
(43) Date of publication of application: **13.08.2008**
(21) Application number: 05811483.6
(22) Date of filing: 30.11.2005
(51) Int. Cl.: G06F 17/30

(54) **DOCUMENT DATA MANAGING METHOD, MANAGING SYSTEM, AND COMPUTER SOFTWARE**

(30) Priority: 16.09.2005 JP 2005269441
(71) Applicant: Bits Co. Ltd., 411-0943 Shizuoka (JP)
(72) Inventor: TAMURA, Takuro, Shizuoka 411-0943 (JP)
(74) Representative: Dunleavy, Kevin James
(86) International application number: PCT/JP2005/021992
(87) International publication number: WO 2007/032095

(57) **Abstract**

The purpose of the present invention is, for large quantities of document data, to display on a document, in a uniform manner, characteristic information that the user wants to reference, without needing to perform work individually for each element or keyword, and to design an efficient utilization of the document data.

In order to attain the above object, there is provided an information handling system 1 for generating and displaying characteristic information of a document within a displayed document data, having an input device 11, a display device 10, a memory device 7, an information display software 15 for reading document data, and a CPU 5, wherein the memory device 7 has a plurality of elements, an identifier specifying at least one element from within the plurality of elements, and characteristic information for each element, and a usable information storage unit 17 for describing their relationships with the identifier information of the elements, and the memory device also has program storage unit 14 for storing computer software executed by the CPU 5, a function wherein the system software 16 receives from the input device 11 a selection of an identifier extracted from the document data; a function for specifying, from the document data read by the information display software 15, the identifier involved in the selection; a function for searching for, from the usable information storage unit 17, characteristic information of an element based on the specified identifier; and a function for displaying on the display device 10, the searched out characteristic information, by burying the characteristic information in a vicinity of a location of the identifier within the document data or by overlapping the characteristic information on the document data.

## Description

### Cross-reference to Related Applications

The present application claims priority under Article 4 of the Paris Convention (and corresponding stipulations of other countries) based upon Japanese patent application No. 2005-269441, filed on September 16, 2005.

### Field of the Invention

The present invention relates to a method and a system for indicating related information within document data, through a computer system, as well as a software program for carrying out this method in a computer system.

### Background of the Invention

Due to the digitization of information from the universalization of computers, and the synergistic effects of information circulation due to the spread of the Internet, the quantities of information that can be taken advantage of is increasing explosively. For example, in the field of biotechnology, due to the development of huge projects, of which the Genome Project is a start, and scientific technologies such as measurement technologies, large quantities of information are being devised every day.

Because systematic information that is useful for various kinds of research, development, etc., is frequently included within such huge electronic data (text data), methods of making use of such information are being considered.

For example, there is a method that takes advantage of hyperlinking, which is a technique that is widely spreading on the Internet. In this, hyperlinks are buried in specific character strings, etc. that are included in text data. When the user puts a cursor on such specific character string, etc. and clicks, associated other information is displayed. By using this method, information associated with character strings, etc. within text can be instantly displayed, thereby improving the convenience to the user.

Additionally, such systems (software) as those for automatically translating text data within a specified range, providing annotations (comments) to specific character strings, etc. included in text data, and preparing summaries (extracts) by utilizing thesaurus dictionaries or analyses of the contexts of text data, have been made practicable. By utilizing such systems, foreign literature, texts that have difficult terms occurring frequently, or lengthy texts, etc. can be efficiently utilized.

For such information handling methods, the following prior literature may be referenced, as examples:
Prior Art Documents:
   Document 1: Japanese Patent Application Publication No. Hei 5-313877
   Document 2: Japanese Patent Application Publication No. Hei 8-292958
   Document 3: Japanese Patent Application Publication No. 2000-10981
   Document 4: Japanese Patent Application Publication No. 2002-207727
   Document 5: Japanese Patent Application Publication No. 2003-6186

However, the present state is that the above-mentioned prior methods all have problems existing that should be solved, and most of the electronic information is buried and not being utilized adequately.

For example, with the method utilizing hyperlinks, for the provider of the information (the text's preparer, sender, etc.) the character strings, etc. at the link source and the other information at the link destination are established beforehand. Thus, the problem exists that the displayed information is uniform.

One can enable the user to originally set up the link source and link destination. However, such work needs to be repeated for each and every character string, etc. and thus, it is unsuitable for document data having large quantities.

Also, regarding the automatic translations or the provision of annotations, they only perform uniform processing according to previously prepared dictionary data, rules, and such. Thus, there is a concern that the user's desired information will not be obtained.

Furthermore, regarding the above-mentioned prior methods, even if the user does not establish the same information (link destination) for a plurality of associated matters, which are included within the document data, the user is still working with reference to a thesaurus dictionary, etc. Thus, unified handling becomes difficult.

The present invention has been made to resolve the above-mentioned problems. It provides a method and system for efficiently utilizing document data having large quantities, without having to perform work individually for each matter or keyword, by displaying in a standard manner upon the document data the characteristic information which the user wants to reference.

### Summary of the Invention

According to a first main aspect of the present invention, there is provided a method for generating and displaying characteristic information of a document within a displayed document data, having an input device, a display device, a memory device, a document data reading means, and a control means, wherein the memory device has a data library describing a plurality of elements, an identifier specifying at least one element from within the plurality of elements, and characteristic information for each element, along with their relationships to identifier information, and the memory device also has a computer software storage unit for storing computer software that is executed according to the control means; an identifier receiving step wherein the control means, through reading and executing the computer software, receives from the input device a selection of an identifier to be extracted from the document data; a specifying step for specifying an identifier affected by the selection, from the document data read by the reading means; a searching step for searching, based on the specified identifier, for characteristic information of an element from the data library; and a display step for displaying on the display device, the searched out characteristic information, by either burying the characteristic information in the vicinity of the location of the identifier within the document data, or by overlapping the characteristic information on the document data.

Here, a plurality of the "elements" are included within a matter of interest (hereinafter "MOI"), which includes all of such actually existing, general objects as genes, proteins, chemical substances, species, organs, cellular tissue, etc., unique objects such as persons, universities, businesses, countries, districts (regions), political parties, etc., and abstract phenomena such as diseases, events, religions, political ideas, histories, etc.

Additionally, for example, if a "gene" is regarded as the MOI, "characteristic information" can be information such as gene loci (Locus), size, GC content, absolute expression level, tissue specific expression frequency, biological function, structural information, localization information, etc. Also, if a "specific researcher" is the MOI, "characteristic information" can be information such as his age, gender, research facility position, particular field, impact factors, etc. Such "characteristic information" is respectively visually expressed as text data (numerical values or definitions/explanations, etc.), drawings and such.

For example, if "gene" is selected as the MOI and "tissue specific expression frequency" is selected as the characteristic information, then a graph expressing the targeted gene's tissue specific expression frequency, is displayed near an identifier, detected within the document data, which stands for the gene. As an example, for genes appearing within a document, which relate to the mutual actions of genes resulting in a disease, it becomes possible in this manner to easily interpret the contents that were originally described. This interpretation can be done while referring to the tissue specific expression information.

In particular, for research branches having greater spheres for further clarifications, such as biotechnology, instances where new knowledge is found through the cross-referencing the known information are not few. Because of this, one can, through the present invention, provide exceedingly useful information to users such as researchers, etc.

Also, according to a second main aspect of the present invention, there is provided an information handling system for generating and displaying characteristic information of a document within a displayed document data, having an input device, a display device, a memory device, a document data reading means, and a control means, wherein the memory device has a data library that describes a plurality of elements, an identifier specifying at least one element from within the plurality of elements, and characteristic information for each element, along with their relationships to identifier information, and the memory device also has a computer software storage part for storing computer software that is executed according to the control means; an identifier receiving means wherein the control means, through reading and executing the computer software, receives from the input device a selection of an identifier extracted from the document data; an identifier specifying means for specifying, from the document data read by the reading means, the identifier involved in the selection; a characteristic information searching means for searching for, from the data library, characteristic information of an element based on the specified identifier; and a display means for displaying on the display device, the searched out characteristic information, by either burying the characteristic information in a vicinity of a location of the identifier within the document data, or by overlapping the characteristic information on the document data.

According to such a configuration, one can obtain via a computer system a document data handling system for suitably realizing the document data handling method of the above-mentioned first main aspect.

Still further, according to a third main aspect of the present invention, there is provided a computer software for functioning as an information handling system in generating and displaying characteristic information of a document within a displayed document data, having an input device, a display device, a memory device, a document data reading means, and a control means, wherein the memory device has a data library that describes a plurality of elements, an identifier specifying at least one element from within the plurality of elements, and characteristic information for each element, along with their relationships to identifier information, and wherein the computer software executes: a receiving process for receiving from the input device a selection of an identifier extracted from the document data; a specifying process for specifying, from the document data read by the reading means, the identifier involved in the selection; a searching process for searching for, from the data library, characteristic information of an element based on the specified identifier; and a display process for displaying on the display device, the searched out characteristic information, by either burying the characteristic information in a vicinity of a location of the identifier within the document data, or by overlapping the characteristic information on the document data.

According to such a configuration, due to the installation and execution at a computer system, one can obtain a computer system for constructing the document data handling system of the above-mentioned second main aspect, and for suitably realizing the document data handling method of the above-mentioned first main aspect.

With the present invention, for large quantities of document data, characteristic information that users want to reference can be uniformly displayed in the documents, without having to perform work individually for each element or keyword. Thus, an effective utilization of the document data can be devised.

With this, it becomes possible for even general users to easily put into practice understandings or new discoveries, conventionally from contents that were only usable by the portion of users possessing specialized knowledge, etc., or from characteristic information regarding elements, etc. that specify the elements or are included within the elements.

### Brief Description of the Drawings

FIG. 1 is an outline drawing showing a system configuration of an embodiment of the present invention.
FIG. 2 is a schema outline drawing showing the relationships among each of the databases in the same.
FIG. 3 is a flowchart showing the processing steps in the same.
FIG. 4 is a drawing showing one example of a user interface for the user's client system in the same.
FIG. 5 is a drawing showing one example of a user interface for the user's client system in the same.
FIG. 6 is a drawing showing one example of a user interface for the user's client system in the same.
FIG. 7 is a drawing showing one example of a user interface for the user's client system in the same.
FIG. 8 is a drawing showing an exemplary system action of the user's client system.
FIG. 9 is a drawing showing one example of facet data.
FIG. 10 is a drawing showing an exemplary system action of the user's client system.
FIG. 11 is a drawing showing an exemplary action of the historical function.
FIG. 12 is a drawing showing an exemplary system action (the handling of various meaning identifiers) of the user's client system.
FIG. 13 is a drawing showing an exemplary system action (the dictionary information display function) of the user's client system.
FIG. 14 is a drawing showing an exemplary system action (the existence position on the human genome) of the user's client system.
FIG. 15 is a drawing showing an exemplary system action (the distribution of molecular weights) of the user's client system.
FIG. 16 is an outline drawing showing a system configuration of an alternative example of the present invention.
FIG. 17 is a drawing showing another exemplary display of characteristic information.

### Detailed Description of the Invention

A best mode of the present invention will be concretely described as follows, while referring to the drawings.

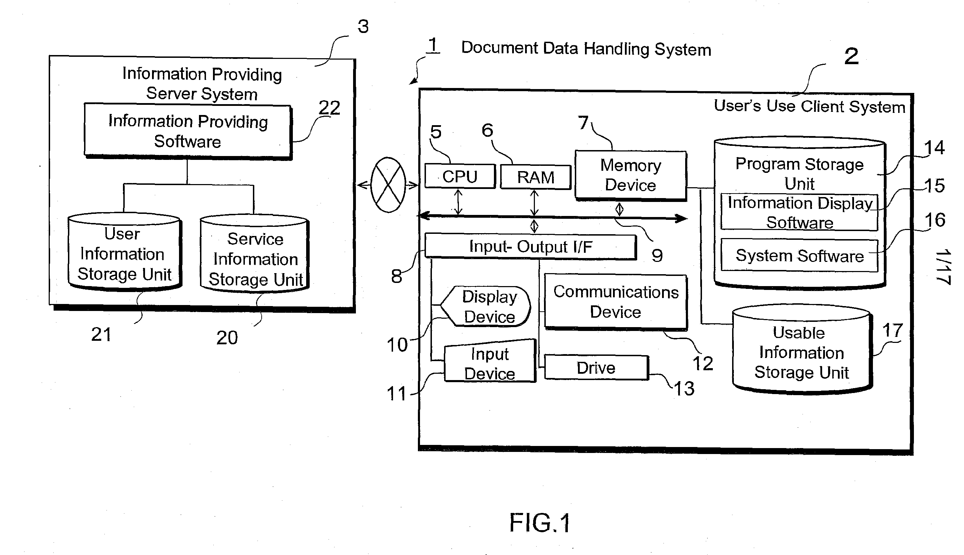

FIG. 1 is a drawing showing an outline configuration of a document data management system, relating to one embodiment of the present invention. This system 1 is arranged with a user's client system 2 and an information providing server system 3, which are connected via a communications network.

The user's client system 2 and the information providing server system 3 can utilize any general purpose computer system.

The user's client system 2 has a hardware arrangement so that a RAM 6, a memory device such as an HDD or ROM 7, and an input-output interface (I/F) 8, are connected via a communications bus 9 to the CPU 5 which is the control means. Connected to the input-output I/F 8 is a display device 10 such as an LED display, an input device 11 such as a mouse or keyboard, a communications device 12 such as a modem, etc., and a drive 13 for a removable recording medium, etc.

The present invention's characteristic management functions, described below, are realized through computer software (such as information display software 15 and system software 16) installed at a program storage unit 14, of the above-mentioned memory device 7. The computer software is called to the RAM 6 via the CPU 5 and, in cooperation with the OS (operation system), the software gets executed.

The above-mentioned memory device 7 is equipped with, in addition to the above-mentioned program storage unit 14, a usable information storage unit 17 for assisting the actions of the system software 16. This usable information storage unit 17 stores information such as: matters of interest (MOIs); plural elements which are included within the MOIs or specifies the MOIs; the characteristic information (facets) of the element; identifiers for identifying each element; type of the facets of each element, and etc.

Here, the types of facets can point to information such as the categories (graphs, fonts, drawings, etc.), sizes, color, etc. of the characteristic information that is displayed. The following describes the data stored within the usable information storage unit 17.

The above-mentioned information display software 15 is, for example, software such as a Web browser. When it acquires document data, it communicates with the information providing server system 3, by way of the communications network, and acquires the characteristic information stored in the below-described service information storage unit 20. It then generates the data to be displayed at the display device 10 of the user's client system 2.

The system software 16 accomplishes processing such as the acceptance of information inputted with the input device 11 by the user, the encryption/decryption handling of the information in the above-mentioned usable information storage unit 17, and the burying of characteristic information at fixed positions in the document data.

The detailed functions of this system software 16 will be described below, with reference to its flow chart.

Meanwhile, the above-mentioned information providing server system 3 is equipped with the functions of a Web server for offering, through a WWW network, information to the user's client system 2. This information providing server system 3 has the similar hardware arrangement as the user's client system 2 (illustration of this is omitted). It's memory device is provided with a user information database (DB) 21, for storing the above-mentioned service information storage unit 20, for storing the MOIs' characteristic information, that have been associated with identifying information (ID), as well as storing the user's login information, etc.

Additionally, the information providing server system 3 has an information providing software 22. When the user's client system 2 is accessed from the information display software 15, this information providing software 22 searches for the necessary information from within the information storage unit 20 and delivers it.

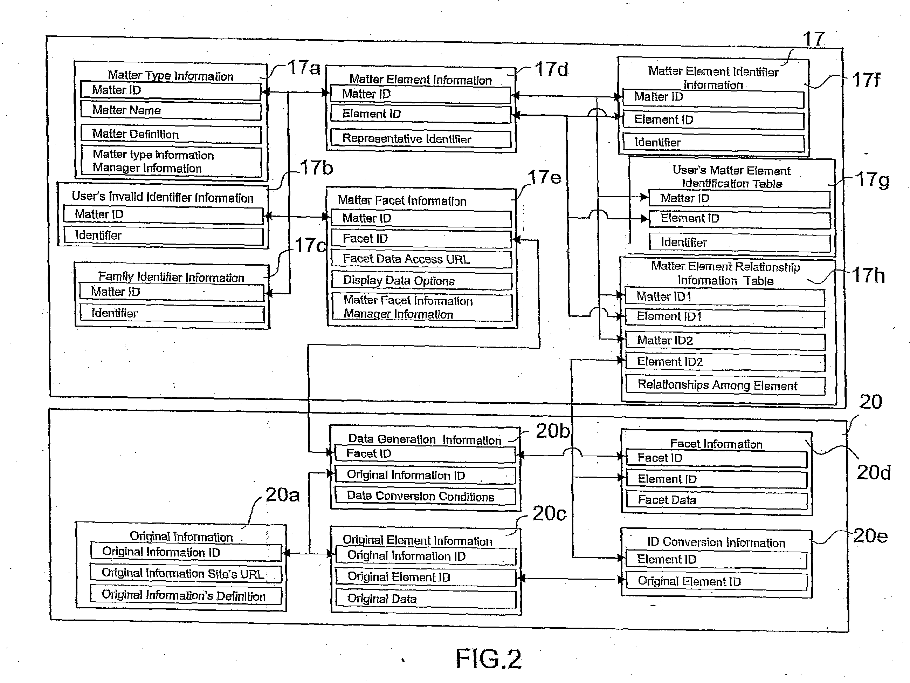

Next, referring to FIG. 2, the data stored in the above-mentioned usable information storage unit 17 and the service information storage unit 20 will be concretely explained. These are made up of tables as listed below, and relational databases which the storage unit can, with the MOI IDs, mutually data reference.

First, the usable information storage unit 17 has an MOI information table 17a, a user's invalid identifier information table 17b, a family identifier information table 17c, an element information table 17d, a facet information table 17e, a matter element identifier information table 17f, a user's matter element identifier information table 17g, and a matter element related information table 17h.

The MOI type information table 17a has stored in it the MOI ID, which is the master ID relating to the definition of a kind of MOI, which is the category of the observed MOI. It also has stored in it the name of the MOI and definitions of the MOI. Genes, proteins, chemical substances, species, organs, cellular tissues, persons, businesses, universities, diseases, and events, can be given as examples of MOIs.

The user's invalid identifier information table 17b has stored in it the identifiers that the user would usually want to make invalid, for specific types (attributes) of the MOIs.

The family identifier information table 17c has stored in it identifiers (family identifiers), for specific types of the MOIs. These identifiers have a common portion which is greater than a lead designated character count, and for identifiers having an end, or ends which interpose a blank, as being a series of numerical values or a series of alphabet letters, such identifiers (family identifiers) are stored with their leading, common portions associated with a series of matter elements.

The matter element information table 17d has stored in it data (matter ID, element ID, representative element name) related to specific individual elements included within the MOI. For example, as elements of the MOI "gene", there are "AKAP10", "AKIP", "AKT 1 ", "ALDH1A1", etc.

The element facet information table 17e has stored in it, the MOI ID, facet ID, facet data access URL and the display data options. In other words, it stores the types of characteristic information (facets) that can be provided related to the targeted matter. For example, if the MOI is "gene", their facets are "size", "function", "absolute expression level", etc. Here, the facet data access URL is the URL for accessing the facet data, having the matter ID, element ID, facet ID, display data option as the source.

Furthermore, the display data options are the selectable options for the displaying of the facet data. For example, they can be selectable options for the display function of the targeted facet, such as display size, display color, upper limit/lower limit, straight line/logarithmic memory, hyperlinks that show the jumped-to destination when the display data is clicked, etc.

The matter element identifier information table 17f has stored in it the MOI ID, element ID, and an identifier standing for the element ID. Here, a representative element name, as well as another name, for the element that has been distinguished by the element ID, is stored. For example, for an element having a representative identifier "ALDH1A1", the identifiers "ALDH1A1", "ALDC", "ALDH1","AL1A1_HUMAN", "P00352", "M31994", "ENAG00000165092", "EC1.2.1.36", etc. can be registered.

The records stored in this table 17f, having been arranged with the element IDs, which are classified by the MOI IDs, then become the identifier dictionary for that matter.

Furthermore, this matter element identifier information table 17f has registered to it identifiers (family identifiers). These identifiers have a common portion which is greater than a lead designated character count, and for the plurality of identifiers having an end, or ends which interpose a blank, as being a series of numerical values or a series of alphabet letters, such identifiers (family identifiers) are registered with the leading, common portions associated with a series of matter elements.

In this manner, the recognition rate of the identifiers within the document data can be improved. For example, for the MOI "protein", "Keratin1", "Keratin2", "Keratin3" ... can exist. However, within the document data, these are frequently not distinguished and simply mentioned as "Keratin". By registering "Keratin" as the family identifier for "Keratin1", "Keratin2", etc., it becomes possible to correspond a series of "Keratin" to the identifier "Keratin" within the document data.

With this type of family identifier, by way of a user interface identical to one that is generally involved in identifiers having various meanings, information or facet data regarding matter elements that have a plurality of associations can be displayed. The selection of a default also becomes possible.

The user's matter element identifier information table 17g has stored in it, for specific types of MOIs, identifiers defined originally by the user, and IDs of matter elements related to the concerned identifiers.

The matter element related information table 17h has stored in it, for identical or differing types of MOIs, 2 differing matter elements and the relationship between them. As the relationship between such elements, the existence or nonexistence of directional natures, or the degree of strength of the relationships, etc. can be included.

In addition, the service information storage unit 20 has an original information table 20a, a data generation information table 20b, an original element information table 20c, a facet information table 20d, and an ID conversion information table 20e.

The original information table 20a has stored in it the original information ID, the original information site's URL, and the definition of the original information.

The data generation information table 20b has stored in it the information (facet ID, original information ID and data conversion conditions) for generating facet data from the original information.

The original element information table 20c has stored in it the original information ID, the original element ID and the original data. The facet information table 20d has stored in it the information provided for the targeted facets of the targeted elements. The ID conversion information table 20e has stored in it the element ID and its corresponding original element ID. This ID conversion information table 20e accomplishes the correspondence of the facet information with the original element information.

Out of the above-described information, the original information table 20a, the data generation information table 20b, the original element information table 20c, and the ID conversion information table 20e are made to be the sources, thereby making it possible to generate facet information from the original information.

Furthermore, if original element information corresponding to a matter element does not exist, or if the facet data cannot be generated, the information providing software 22 can generate text or images showing that facet data cannot exist (characters for "no data" or an icon for "?", etc.). In this way, it can be stated clearly that facet data cannot exist.

With such information, for identifier dictionaries or facet data presented to the public by the developer/creator, it may be desirable to avoid via encryptions using public key cryptosystems, any manipulations that are unforeseen by the developer. In other words, it is better for the original data presented to the public by the developer, etc. to be encrypted with a secret key. Then the system software 16 can use a public key that has been presented to the public by the developer to decrypt the information and use that information.

With this kind of concise data structure and independence among data, as well as the encryption handling, a third party can easily develop and offer matter elements, identifier dictionaries, facet data, etc., both independently and as a set, for use with the present system.

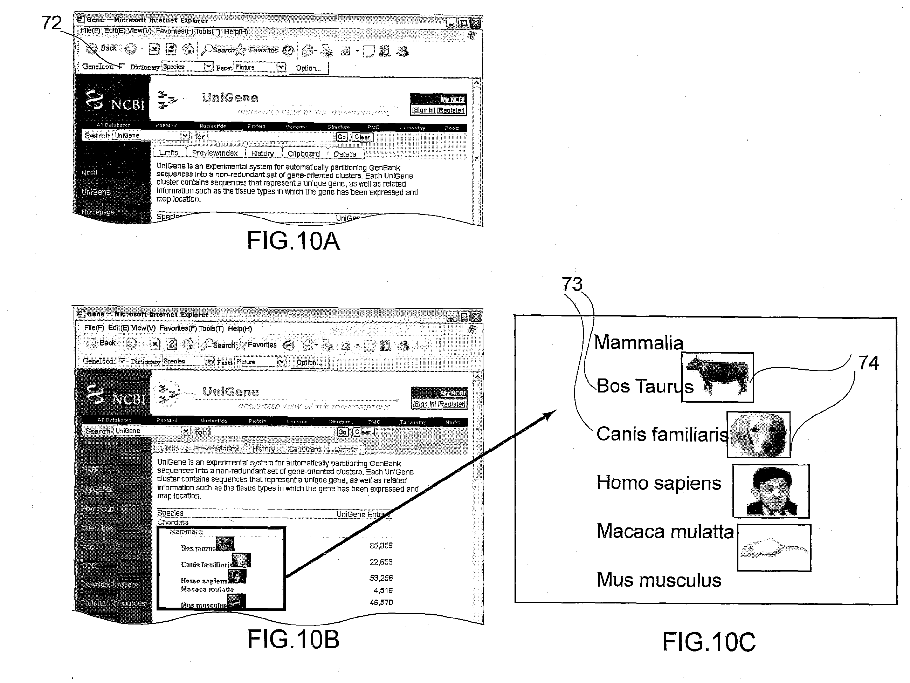

Here, as the targeted facet, for example, for the matter "species", for the facet "species image" (referring to the below-described FIG. 10B), that corresponds to each of its elements, it can be produced or measured one record at a time. Alternatively, for example, for the matter "gene", for the facet "size", the generation can be accomplished from original information that exists for each element, in an information processing manner.

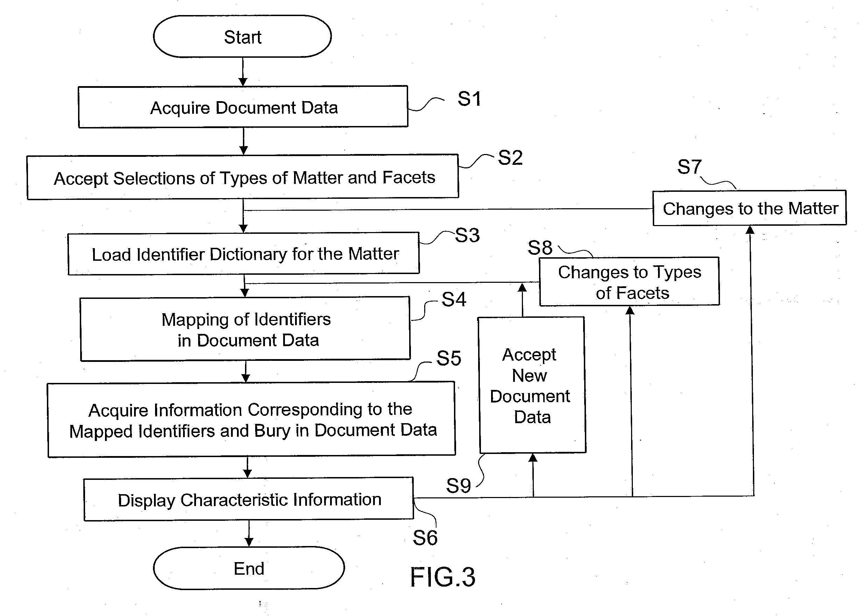

Next, referring to the flowchart of FIG. 3, the steps of information processing carried out by the above-mentioned system software 16, will be explained.

In the following discussion, an example will be shown where "gene" is selected as the user's MOI for the targeted document, and "size" is specified as the facet, which is the type of characteristic information to be added to the document.

First, when the information display software 15 acquires the computerized document data and displays it on the display device 10 (step S1) selections from the user are accepted for which MOI included within that document data, and which types of facets he wants obtain, as the characteristic information to be added to the document data (step S2).

In this example, for the user's MOI "gene", the type of facet "size" is selected. The system software 16 loads the identifier dictionary (refer to the matter element identifier information table 17f of FIG. 2) from the usable information storage unit 17, corresponding to the selected MOI (gene) (step S3). This identifier dictionary is a collection of terms or a collection of IDs that can distinguish the specific elements included in the selected matter (gene). A plurality of identifiers can exist to specify one element.

Subsequently, the system software 16 searches for (maps) the above-described identifiers from within the document data, and they are distinguished as elements of the targeted matter (step S4). In addition, one can also search on non-displayed information buried within the document data.

Through this mapping, adjacent to the distinguished elements, links are buried (step S5). The links go to information providing software 22 for providing, statically or dynamically, characteristic information relating to such elements, in accordance with the selected facet (size).

The information display software 15 acquires the characteristic information according to the links buried within the document data. Such characteristic information is displayed by either expanding it within the document data display, or by overlapping the document data display (step S6).

Furthermore, if the searched for identifiers at step S4 are identifiers with various meanings that simultaneously show a plurality of elements, the above-mentioned information display software 15 displays text (characters for "various meanings identifier", "M") or images (icons, etc.) to show that they are identifiers with various meanings. The information display software 15 can also display the plurality of elements shown by such identifiers lined up, or still further, it can generate a user interface (such as a selection menu) to enable the selection of the element to be the display subject, and display such an interface at the display device 10.

The information display software 15 then carries out the display processing for the characteristic information, for the element selected at the selection menu, etc.

Additionally, after displaying this characteristic information, if a change to the MOI from the user is accepted (step S7), the above-mentioned system software 16 and the information display software 15 carry out the processing of the above-mentioned steps S3 -- S6, based on the modified MOI.

Still further, if changes to the type of facets are accepted (step S8), the processing of steps S4 -- S6 is carried out according to the type of facets involved in the changes. Then again, if new document data is acquired (step S9), and if the same MOI and facet information are successively selected, the processing of steps S4 -- S6 is carried out with regard to the new document data.

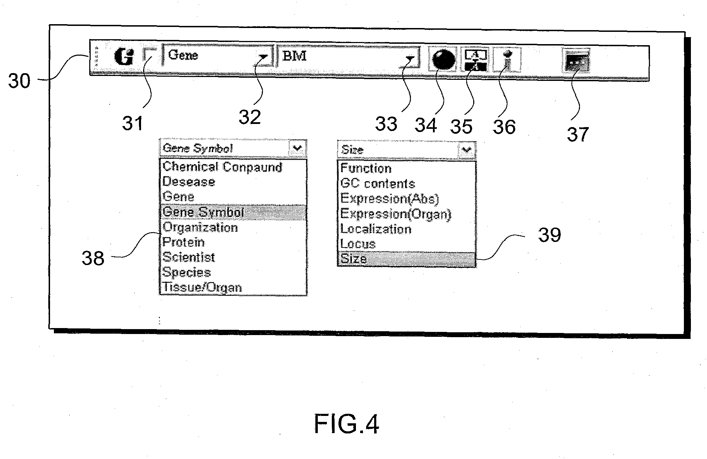

Next, the actions and functions of the present invention will be concretely explained, with reference to the exemplary display screens, etc. of FIGS. 4 -- 16.

First, FIG. 4 shows an example of a user interface of the user's client system 2. In the present embodiment, the user interface is implemented as a toolbar 30 of the Web browser. This toolbar 30 has a check box 31 for switching between the display/non-display of information, a pull-down button 32 for selecting the MOI, a pull-down button 33 for selecting the type of facet, a button 34 for re-executing the identifier mapping, a switching over button 35 for the display/non-display of the highlighting of the recognized identifiers, a switching over button 36 for the display/non-display of the mapping information panel, and an option button 37 for opening a dialog box to set up the action options.

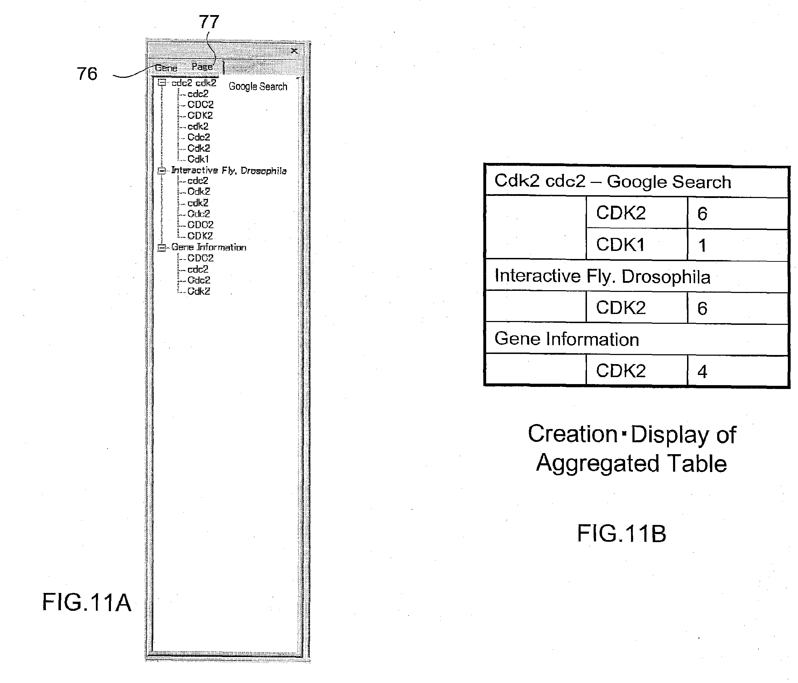

Here, the above-mentioned re-execution button 34 is convenient for when re-executing the identifier mapping after changing its parameters. As an example of such a case, regarding the identifier recognition state table of the below-described FIG. 11, after setting up the matter element that is default displayed for identifiers with various meanings, the mapping would then be re-executed.

In this manner, with a plurality of commands implemented on a toolbar, it becomes possible to utilize the functions simply and easily. When the pull-down button for selecting the MOI 32 is clicked, a pull-down list menu 38 is displayed. When "Gene Symbol" is selected as the MOI, if the pull-down button for selecting the facet 33 is clicked, a pull-down list menu 39 is displayed. With this interface, one type of MOI and a facet can be selected.

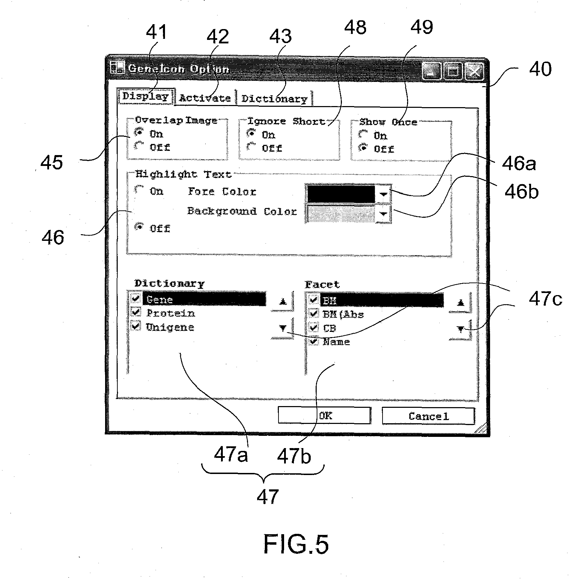

FIG. 5 is an example of the action option set up dialog box 40 that is displayed when the option button 37 of the user interface of FIG. 4 is clicked. This action option set up dialog box 40 has, via 3 tabs, the set up items Display 41, Activate 42, and Dictionary 43, that one can switch among.

This drawing shows an example where the Display set up tab 41 is opened. This tab 41 has an overlap set up box 45 for selecting whether the displaying will be done with the facet information buried within the document data, or with such information overlapped; a highlight text set up box 46 for setting up whether the identifiers recognized as elements within the document data will be displayed with highlighting; a set up box 47 for setting up whether facet information that is specified by a plurality of matters (47a) and a plurality of facets (47b) will be displayed; an option set up box 48 for setting up, for when a long identifier and a short identifier are recognized at the same position in the document data, ignoring the identifiers that fall within the recognition range of other identifiers (short identifiers), and preferentially displaying the long identifiers; and an option set up box 49 for when the same element is recognized a plural number of times in the document data, whether only the facet information for the first element will be displayed.

Here, in the above-described highlight text set up box 46, the set up of the text color and the background color 46a, 46b are also prepared. Additionally, the display order for when a plurality of matters or facet data are displayed is determined by the display order at the display information selection list boxes 47a, 47b. This display order at the list boxes 47a, 47b can be changed via the display order change button 47c.

Furthermore, when, for example, a plurality of identifiers such as "kinesin" and "kinesin receptor" are recognized at the same position for the MOI "gene", if the above-described identifier preferential display option set up 49 is turned "on", then the former identifier of "kinesin" will be ignored.

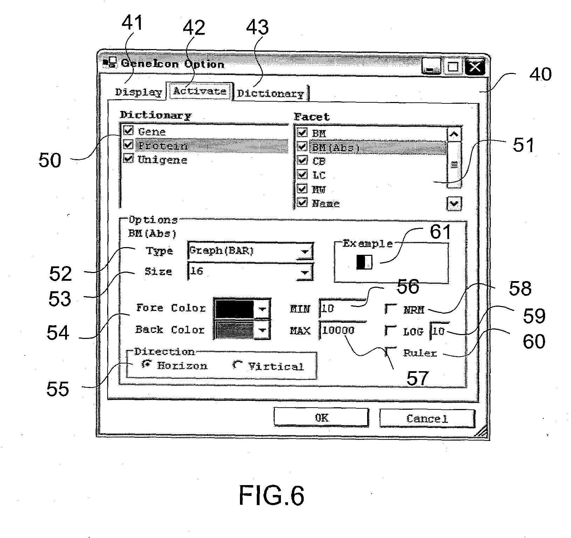

FIG. 6 shows an example of when the Activate tab 42 at the action option set up dialog box 40 of FIG. 5 is opened. Here, there are items 50, 51, for selecting the matters to be displayed in the matter lists at the user interface of FIG. 4 and at the Display tab 41 of the action option set up dialog box 40 of FIG. 5, and for selecting the facets to be displayed in the facet list.

Also, there are items S2--60 for setting up the options for facet display. To put it concretely, as parameters for facet data generation, there are the set up 52 for the types to be generated, the set up 53 for the display size, and the set ups 54--60 for the generation parameters. For the types to be generated, it is possible to specify text, graphs (circle, bar, broken line, plural bar, pie, or others), images, or a custom type.

Also, generation parameters that correspond to each such generation type can be specified. As an example, for the generation of graphs, it is possible to specify the color 54, the direction of the graph 55, a maximum value 56, a minimum value 57, the set up of whether or not to standardize 58, the set up of whether or not to do a logarithmic conversion 59, the set up of whether to display/not display the rules, etc.

A sample 61, for on-the-spot confirmation of such settings is also displayed.

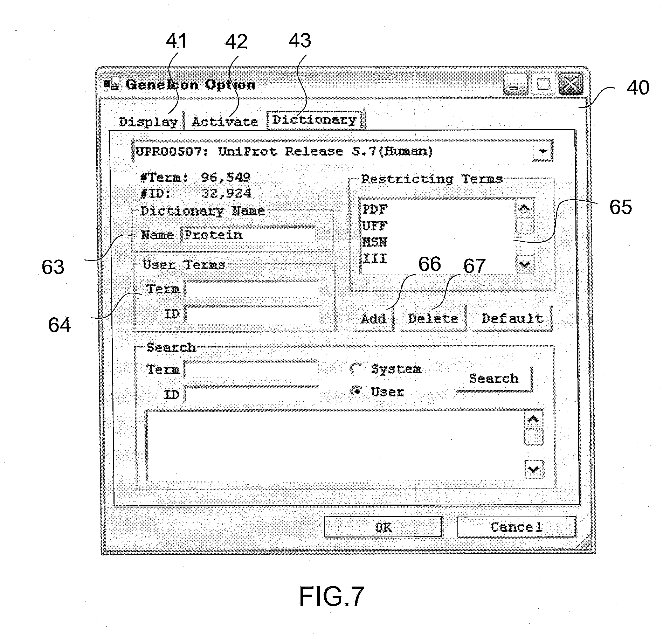

FIG. 7 shows an example of when the Dictionary tab 43 of the action option set up dialog box of FIG. 5 or FIG. 6 is opened. With this screen, a user interface is provided for setting up identifiers added by the user or specific identifiers desired to be made invalid, in the identifier dictionary corresponding to the specified MOI, which is stored in the above-mentioned usable information storage unit 17.

Therefore, this user interface has a text box 63 for displaying/changing the dictionary name that corresponds to the targeted MOI, a text box 64 for inputting identifiers desired to be newly registered, and a text box 65 for the at-a-glance display of invalidated identifiers.

When adding identifiers, the user's identifying information and the corresponding element IDs are inputted at the identifier input text box 64 and registered. Furthermore, it is also possible to delete identifiers that have been added through using this identifier input text box 64.

When desiring to invalidate specific identifiers (register the attributes), a button 66 for adding invalidated identifiers is clicked with the mouse, and an input box that is not illustrated will be displayed. When invalidation is selected, that ID is registered in the above-mentioned user's invalid identifier information table 17b, and the above-mentioned information display software 15 references this table 17b and distinguishes whether to display the characteristic information.

Additionally, the user can select, from the invalidated identifier display text box 65, the identifiers for which he wants to cancel the invalidation. By clicking the delete button 67, the invalidations can then be individually canceled.

For example, an identifier for a certain matter may be the same as one for a term, etc. having a different meaning, in document data referenced by the user. In such a case, there exists a concern that a matter which differs from the matter intended by the user will be recognized, and the common characteristic information will be displayed within the document data.

To put it concretely, if "human gene" is the matter, the identifier pointing to the human gene "peptide deformylase-like protein" includes "PDF", which is the same as the title of the document file format, "PDF (Portable Document Format)" of the Adobe Company. Because of this, document data that includes the latter cannot distinguish only the former. Thus, for such a case, it has been made possible to invalidate the identifier involved, "PDF".

Additionally, it is desirable to design this user interface so that the setting up of the user's addition of specific identifiers or their invalidation are selectable to be permanent, or for a plurality of document data within a series of handlings (a session), or for the specific document data currently being displayed.

Furthermore, it is efficient for when the user wants to always invalidate that identifier, to have a function where the invalidated identifier is specially stored within the usable information storage unit 17, and such restrictions occur whenever the system software 16 makes use of the identifier dictionary.

Then again, as the user interface for invalidating specific identifiers within a series of sessions or within the document data involved, it is effective to display a pop-up menu by right-clicking with the mouse the facet data, which is displayed through the information display software 15 and from distinguishing the identifiers involved. Then, an execution command (for invalidating within the session, invalidating within the page) can be prepared within this menu.

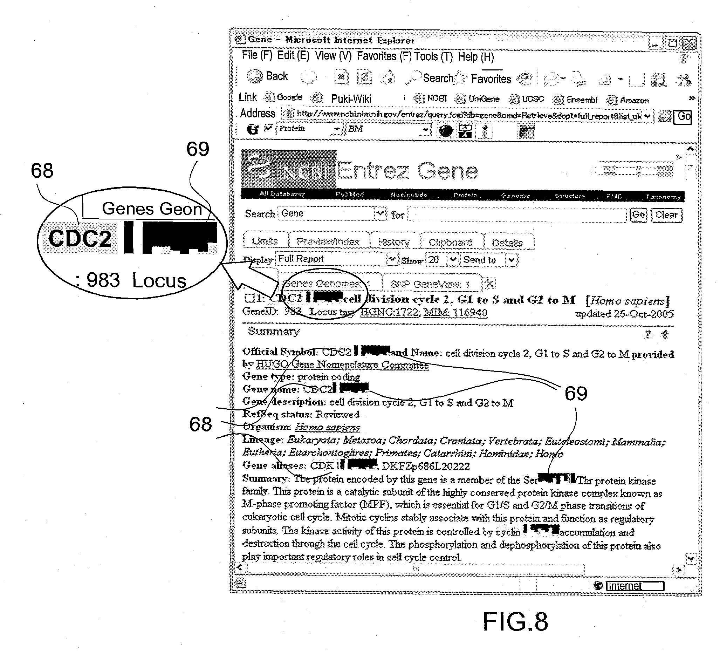

FIG. 8 is an example of when the information display software (a Web browser, etc.) 15 and the system software 16 of the user's client system 2, operates and displays document data. In this example, the MOI "Protein" and the facet "BM" are selected. Here, BM is the gene expression frequency pattern data of 10 tissues.

Along with the distinguishing and highlighted displaying, at the displayed document data, of identifiers 68, 68 such as "CDC2", "CDK1" which stand for "Protein", the bar graph 69 showing the expression frequency pattern of the 10 tissues, which is the facet data, are displayed next to these identifiers 68.

The facet data such as the bar graph 69 shown in this example, are dynamically generated through the above-mentioned information providing software 22 referencing the original element information table 20c. That is, this generation can be done at the time of a demand from this user's client system 2. Because of this, the user can change the set ups at the user's client system 2, and change the display configurations in real-time.

The user can respectively take advantage of, by left-clicking the identifier 68 with the mouse, the hyperlinks to the matter elements set up by the manager of the matter information (the data developer or the provider), or, by left-clicking the facet data (the bar graph 69) with the mouse, the hyperlinks to the facet data that have been set-up by the manager of the facet data (the data developer or the provider).

Additionally, at the pop-up menu displayed by right-clicking the mouse, one can take advantage of hyperlinks to MOI information resources or MOI elements that have been set up by the manager of the matter information (the data developer or the provider), as well as hyperlinks to facet data information that have been set up by the manager of the facet data.

It is also possible to take advantage of the displaying of the list of the various meaning identifiers that have a plurality of meanings, and selections from that list, the invalidation of specific identifiers, the commands for reporting claims by the user, etc. When the selection of various meaning identifiers or the invalidation of identifiers are targeted, it is desirable to prepare the commands as menu items, so that the user can select among any of a permanence; a plurality of document data within a series of handlings (a session); or the specific document data currently being displayed.

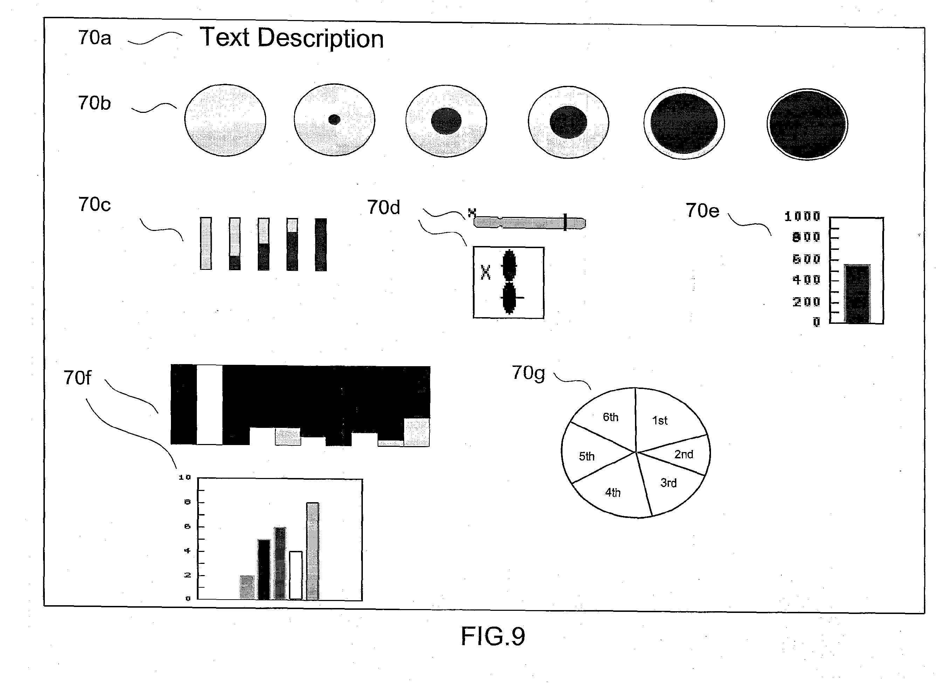

FIG. 9 is an example of facet data, which can be dynamically generated from the original element information table 20c. For example, they can be text 70a, a circle graph 70b, a bar graph 70c, locus information, which is positional information on a chromosome 70d, a bar graph with a scale 70e, a plural bar graph 70f, a pie chart 70g, etc. For each, it is possible to specify the display size and color, the lengthwise/crosswise display, the lower limit/upper limit values and/or the straight line/logarithmic conversions for the original information, etc. (refer to FIG. 6).

FIGS. 10A -- C are examples of displays of document data from the operation of the information display software (a Web browser, etc.) 15 or the system software 16, of the user's client system 2. In this example, the matter "Species" and the facet "Picture" are selected.

When the check box 72 is clicked with the mouse, the information display "off" state of FIG. 10A turns into the information display "on" state of FIG. 10B. In this condition, as shown enlarged in FIG. 10C, next to the scientific names (identifiers) of the organisms within the document data 73, images of each organism (characteristic information) 74 are respectively displayed.

FIG. 11 is a drawing showing a function where the history of the information handled at the user's client system 2 is managed, and then totaled to make it usable. In this drawing, an example is shown where for the matter "gene", each of genes "Cdc2", "Cdk1", "Cdk2" is recognized at a plurality of pages.

With this historical management function, element information that has been recognized in the previously handled document data (the pages) is tree-displayed with the MOI 76 and/or the page 77 as the units, as shown in FIG. 11A. From this tree, when the MOI and the page are clicked with the mouse, the MOI or page involved is displayed. As shown in FIG. 11B, the recognized elements can also be totaled and displayed in a table format.

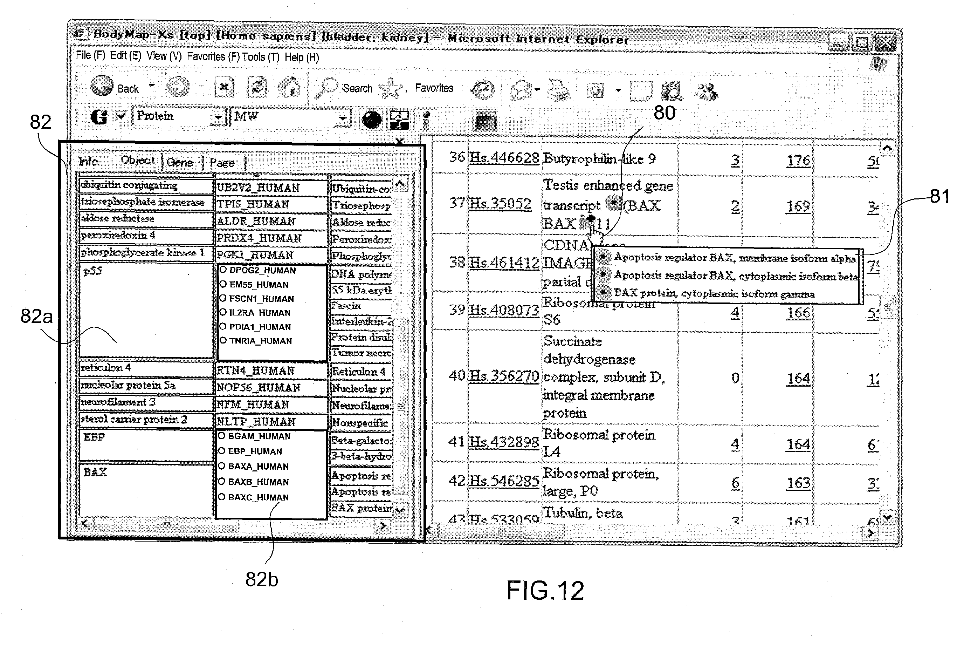

FIG. 12 is a drawing for explaining the handling of the various meaning identifiers. If the name of the element is made the identifier, there are cases where, as in words having various meanings, one identifier may have a plurality of elements corresponding to it. In such a case, it may be desirable to display through an icon 80, for example, that an identifier recognized within the document data corresponds with a plurality of elements.
If the user brings the mouse pointer together with this icon or right-clicks on it, a pop-up screen 81 which includes the representative names (= representative identifiers) and characteristic information of the corresponding elements is displayed, and the user can then select a specific element from within the list. When a specific element is selected at this screen 81, the icon 80 is changed to the selected element's characteristic information, or the selected element's characteristic information is written side-by-side with the icon 80.

When specific MOIs are being selected in this manner, it is also desirable to prepare the commands as menu items, so that the user can select, for the associating of the MOIs and the identifiers, among any of a permanence; a plurality of document data within a series of handlings (a session); or the specific document data currently being displayed. In this case, depending on the text mining means, it may be efficient to display at a higher rank in the selection candidates, the MOIs from within the plurality of MOIs involved that are suitable to the targeted document. Or, it may also be efficient to have a default for the selection candidate.

On the other hand, displayed at the display portion 82 of the page's left side in FIG. 12, are a list 82a of identifiers recognized in the concerned pages of the document data at the page's right side, or an interface 82b for element selection. Within such recognized identifiers are included the above-mentioned various meaning identifiers.

) This display portion 82 becomes an efficient interface for providing the elements existing in the targeted document, or information regarding their nature of having various meanings.

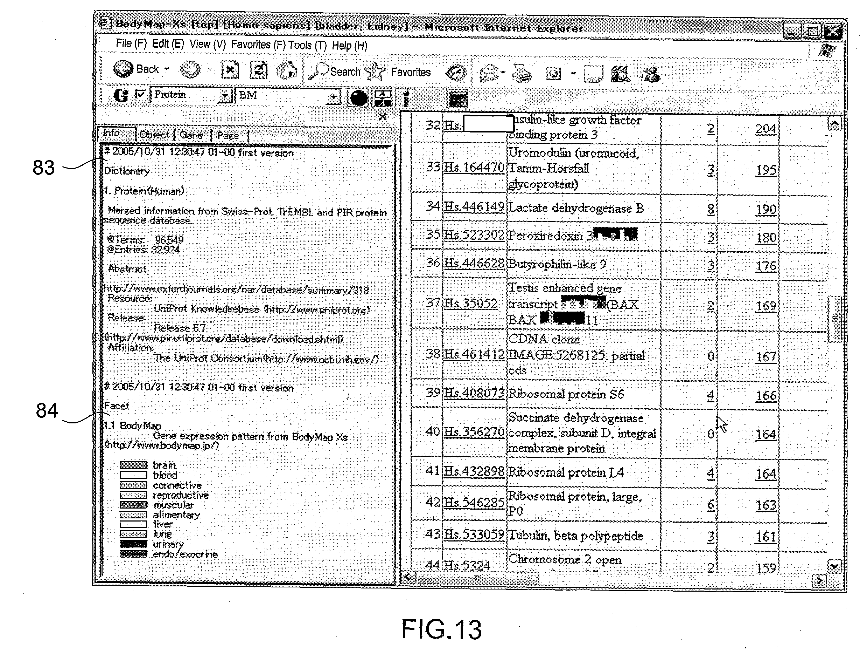

FIG. 13 is a drawing showing the dictionary information display function. This drawing's display screen comprises a display portion 83 for information relating to the identifier dictionary stored at the above-mentioned usable information storage unit 17 (element identifier information table 17f), and a display portion 84 for information relating to the facet data stored at the service information storage unit 20 (facet information table 20d).

The number of identifiers included in such an identifier dictionary or the number of matter elements, information regarding resources used in the construction of the identifier dictionary, etc., Web sites that provide text, images, resource information and other related information that can be acquired by hyperlinks, are useful information for the user.

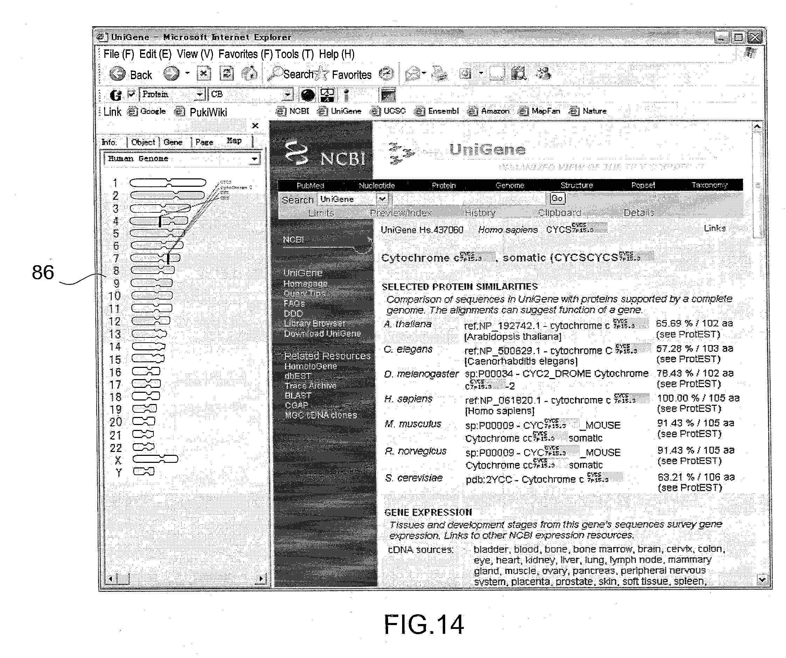

FIG. 14 is an example of, for the matter "protein", the existence positions in the human genome of the various proteins which are the elements recognized within the document data. Such existence locations are displayed at a human complete chromosome outline sketch, which is displayed at the map tab 86 of the information panel.

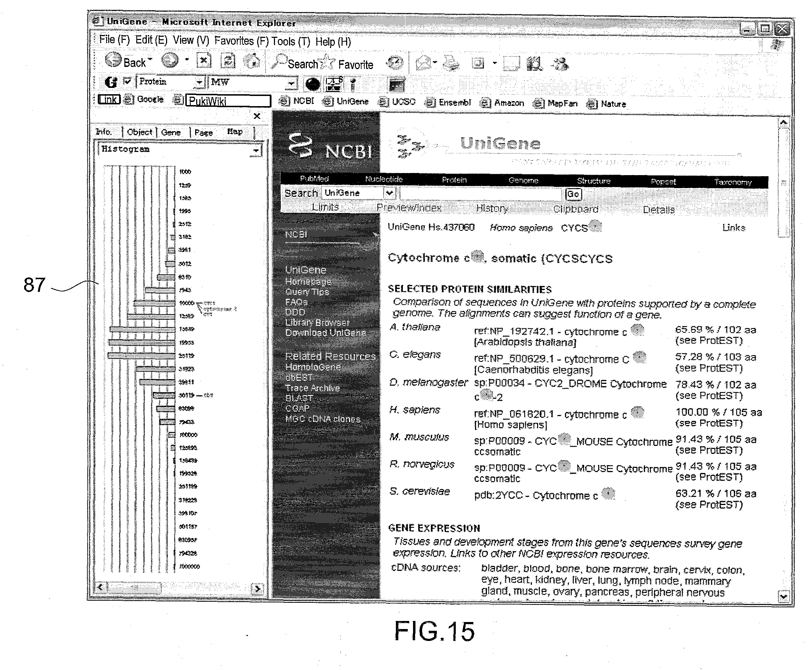

FIG. 15 is an example of the distribution of molecular weights (logarithmic frequencies) for the all of the elements of the types of the various proteins, which are similarly recognized within the document data. Such a distribution of molecular weights is displayed at the map tab 87 of the information panel.

In this manner, at the map tab of the information panel, one can select from a pull-down menu a map that is usable and that corresponds to the selected matter. Identifiers recognized within the document data can be mapped to information that accords with the matter, such as maps, charts, graphs, and the like. Thus, information that permits the easy learning of an outline of the recognized elements can be provided.

Furthermore, this invention is not limited to the above-mentioned embodiment, and within a scope that does not alter the main points of the invention, various changes are possible.

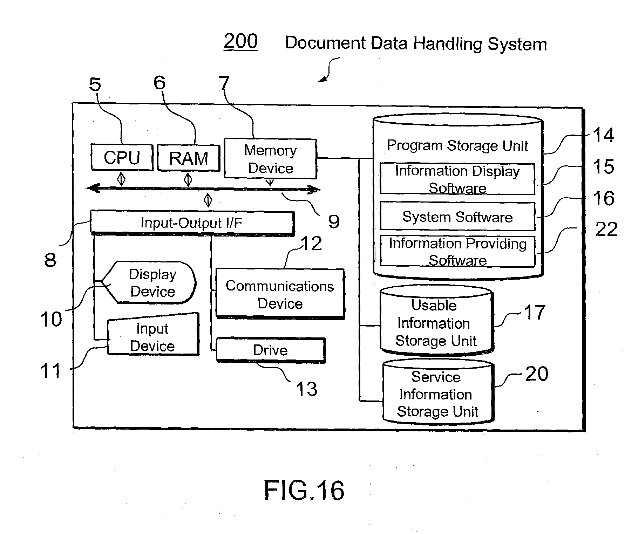

For example, in the above-mentioned embodiment, this system 1 is arranged with a user's client system 2 and an information providing server system 3. However, it can also be arranged with just the user's client system 2. In that case, as shown in FIG. 16, it can be arranged such that the user's client system 200 is equipped with the service information storage unit 20 and the information providing software 22. The characteristic information in such a case can be downloaded from a WEB server through the WWW, or it may be introduced from memory media such as a CD-ROM.

Also, one can prepare a function for reporting to the manager of the matter type information (the creator being also included; similarly for the following), regarding information about the identifier dictionary stored in the usable information storage unit 17. This function is one in which the user reports to the manager of the matter type information, the identifiers that do not exist in the identifier dictionary stored in the above-mentioned usable information storage unit 17, or errors in the element IDs corresponding to the identifiers, or claims (defects, deficiencies, etc.) regarding facet data displayed through the element IDs that correspond to the identifiers. In this way, the accuracy of the identifier dictionary can be improved.

As a user interface to realize this, a new identifier reporting dialog box would be efficient, for reporting identifiers that do not exist in the identifier dictionary. This dialog box can be prepared at the registration confirmation dialog box for the user's identifier registration.

Also, regarding errors in the element IDs that correspond to the identifiers, and claims regarding the facet data, it would be effective to arrange a function for opening a claim dialog box. Such a claim dialog box would be within the pop-up menu that is displayed when right-clicking with the mouse the facet data, which is displayed when the identifiers involved are distinguished via the information display software 15.

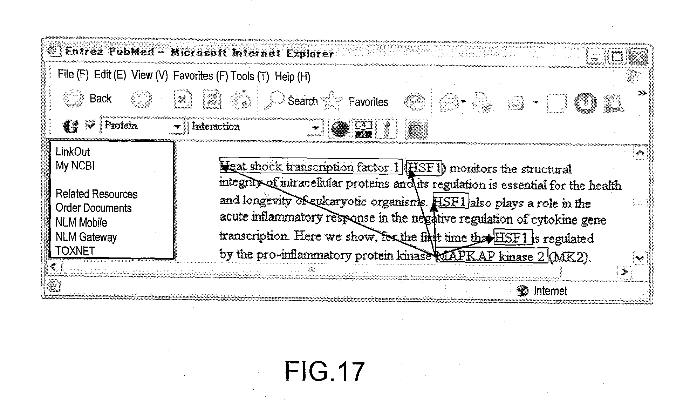

It may also be desirable in the present invention to display, as the facets (characteristic information) the relationships among the plurality of matters or elements. For example, as shown in FIG. 17, for the MOI (Protein) specified via the identifiers extracted from the document data, the mutual effects among a plurality (5 of them in the displayed example) of proteins (matters) are, as characteristic information, buried within the vicinities of the identifiers or displayed overlapped. Such relationships among a plurality of elements are stored within the matter element related information table 17h of FIG. 2.

In this manner, useful information for acquiring new knowledge, that cannot be obtained (or that are difficult to obtain) when referring to only the individual matters or elements, can be presented.

## Claims

1. A method for generating and displaying characteristic information of a document within a displayed document data, having an input device, a display device, a memory device, a document data reading means, and a control means, comprising:
wherein said memory device has a data library describing a plurality of elements, an identifier specifying at least one element from within the plurality of elements, and characteristic information for each element, along with their relationships to the identifiers, and said memory device also has a computer software storage unit for storing computer software that is executed according to the control means;
an identifier receiving step wherein said control means, through reading and executing the computer software, receives from said input device a selection of an identifier to be extracted from the document data;
a specifying step for specifying an identifier affected by said selection, from the document data read by the reading means;
a searching step for searching, based on said specified identifier, for characteristic information of an element from the data library; and
a display step for displaying on the display device, the searched out characteristic information, by either burying the characteristic information in the vicinity of the location of the identifier within said document data, or by overlapping the characteristic information on the document data.

2. The method of claim 1, wherein said data library describes a plurality of matters that include at least any of a gene, species, school, person, business, disease, or event;
an element arrived at from information included within each matter or information specifying a matter;
an identifier arrived at from text data being a character string, symbol, numerical value and the like, that is included within the matter or element and/or specifies at least one matter or element; and
characteristic information consisting of facet data which includes a format for displaying on the document data;
and said characteristic information searching step includes, from specifying the element based on the identifier specified from the document data which is an essay, a Web site, sentence data, e-mail or the like, searching for the characteristic information of that element from the data library.

3. The method of claim 2, wherein said data library describes, as an identifier, at least a name of the matter or the element, and the name's synonym.

4. The method of claim 3, wherein at said outputting step, if a plurality of elements correspond to the identifier specified at the document data, characteristic information of the plurality of elements involved is, while referencing said data library, at-a-glance displayed at the display device,
and at least one characteristic information selected by a user from this at-a-glance display, is buried within the document data or overlapped on the document data and displayed.

5. The method of claim 1, wherein said data library describes at least one identifier common to a plurality of elements,
and at said searching step, if the plurality of elements has relationships added to the specified identifier, said step includes a step for at-a-glance displaying on the display device, the involved plurality of elements and accepting a selection of at least one element,
and the characteristic information of the at least one element affected by the selection is searched for from the data library.

6. The method of claim 1, wherein said data library registers an attribute which is a targeting or anon-targeting for display of the characteristic information of the specified identifier,
and said outputting step includes a step of the control means distinguishing whether to display the characteristic information regarding the identifier specified at the document data.

7. The method of claim 1, further comprising a step wherein said control means acquires and stores in the memory device, at least any of an information of the element, identifier and characteristic information, from a creator or manager of this information;
a step wherein if information of an element or identifier not registered at the data library, or an addition of a relationship between an element and an identifier, is incorrect or insufficient, then any of the information of the involved identifier and the element is accepted via the input means;
and also comprising a step of notifying the creator or manager of said data library, the accepted revision information.

8. The method of claim 1, wherein said data library registers a plurality of identifiers having high mutual relationships, with their relationships added,
and at said searching step, if any of said plurality of identifiers having the relationships added, from within the document data, is specified, then the characteristic information is searched for, while referencing said data library.

9. The method of claim 1, further comprising a step wherein said control means displays at-a-glance, at least any of the element, identifier, or characteristic information described in the data library.

10. The method of claim 1, wherein said data library is one that describes one identifier corresponding to a plurality of elements,
and said characteristic information searching step is one which displays the plurality of elements corresponding to the identifier involved, specified from within the document data, and accepts a selection from a user, and searches for characteristic information related to the element that is selected.

11. The method of claim 1, wherein said control means further comprises a step of specifying an element that relates, being based on the identifier specified at said identifier specifying step,
and displaying information about this element in the form of a map, chart, graph and the like, according to the matter involved.

12. The method of claim 1, further comprising a step wherein said control means prepares a list of a plurality of elements specified based on an identifier specified from within the document data,
and displays in table format, an appearance frequency of each identifier or element within the involved document data, or displays information specified by a type of information selected.

13. The method of claim 1, further comprising a step wherein the control means stores in said memory device, historical information of an identifier specified within the document data and an element having a relationship with this identifier, with such relationship being added to distinguishing information of the element or identifier,
and displaying on the display device a historical display, in units of the element or the document data being handled.

14. The method of claim 1, wherein said document data is data in a hyperlink text form, and said characteristic information display step is one where the characteristic information is either buried in the vicinity of the location of the identifier in the hypertext, or overlapped on the document data, and displayed on the display device.

15. The method of claim 1, wherein said characteristic information display step is one where the characteristic information is dynamically generated, based on information stored in the data library.

16. The method of claim 1, wherein at said characteristic information searching step, as the characteristic information, a relationship between an element specified based on an identifier specified from the document data, with an other element, is searched for from said data library.

17. The method of claim 1, wherein said computer system is made of an information providing server system and an information display client system, connected via a communications network,
and a memory device of said information providing server system has a server information storage unit for describing, from within the data library, a plurality of elements and identifiers having added thereon relationships with distinguishing information of the elements,
and a memory device of said information display client system has a usable information storage unit for describing, from within the data library, characteristic information of each element, having added thereon relationships with distinguishing information of the elements.

18. An information handling system for generating and displaying characteristic information of a document within a displayed document data, having an input device, a display device, a memory device, a document data reading means, and a control means, comprising:
wherein the memory device has a data library that describes a plurality of elements, an identifier specifying at least one element from within the plurality of elements, and characteristic information for each element, along with their relationships to the identifier,
and said memory device also has a computer software storage part for storing computer software that is executed according to the control means;
an identifier receiving means wherein said control means, through reading and executing said computer software, receives from said input device a selection of an identifier extracted from the document data;
an identifier specifying means for specifying, from the document data read by the reading means, the identifier involved in said selection;
a characteristic information searching means for searching for, from the data library, characteristic information of an element based on said specified identifier; and
a display means for displaying on the display device, the searched out characteristic information, by either burying the characteristic information in a vicinity of a location of the identifier within the document data, or by overlapping the characteristic information on the document data.

19. A computer software for functioning as an information handling system in generating and displaying characteristic information of a document within a displayed document data, having an input device, a display device, a memory device, a document data reading means, and a control means, comprising:
wherein the memory device has a data library that describes a plurality of elements, an identifier specifying at least one element from within the plurality of elements, and characteristic information for each element, along with their relationships to the identifier,
and wherein said computer software executes:
a receiving process for receiving from said input device a selection of an identifier extracted from the document data;
a specifying process for specifying, from the document data read by the reading means, the identifier involved in said selection;
a searching process for searching for, from the data library, characteristic information of an element based on said specified identifier;
and a display process for displaying on the display device, the searched out characteristic information, by either burying the characteristic information in a vicinity of a location of the identifier within the document data, or by overlapping the characteristic information on the document data.
